Europäisches Patentamt

European Patent Office

Office européen des brevets

(11) Publication number: **0 198 077 B1**

(19)

# EUROPEAN PATENT SPECIFICATION

(12)

(45) Date of publication of patent specification: **15.01.92**    (51) Int. Cl.⁵: **F02C 3/04**, F02C 6/00

(21) Application number: **85905952.9**

(22) Date of filing: **07.10.85**

(86) International application number:
**PCT/US85/01966**

(87) International publication number:
**WO 86/02406 (24.04.86 86/09)**

(54) GAS TURBINE ENGINE.

<table>
<tr><td>

(30) Priority: **10.10.84 US 659328**

(43) Date of publication of application:
**22.10.86 Bulletin 86/43**

(45) Publication of the grant of the patent:
**15.01.92 Bulletin 92/03**

(84) Designated Contracting States:
**DE FR GB IT SE**

(56) References cited:
**DE-A- 3 217 741**
**FR-A- 2 197 116**
**GB-A- 2 118 248**
**US-A- 3 472 487**

</td><td>

(73) Proprietor: **PAUL, Marius A.**
**3200 Cherry Avenue**
**Long Beach, CA 90807(US)**

(72) Inventor: **PAUL, Marius A.**
**3200 Cherry Avenue**
**Long Beach, CA 90807(US)**

(74) Representative: **Valentine, Francis Anthony Brinsley et al**
**REDDIE & GROSE 16 Theobalds Road**
**London WC1X 8PL(GB)**

</td></tr>
</table>

EP 0 198 077 B1

Rank Xerox (UK) Business Services

## Description

This invention relates to gas turbine engines.

The superior characteristics of the gas turbine engine for numerous high power applications, both military and commercial, are well known. Low specific weight and fundamental mechanical simplicity particularly favor this type of engine.

Numerous developmental paths are available for reducing the gas turbine engine's fuel and air consumption and for reducing its size and weight.

Thus, for example US-A-2,095,991 discloses a gas turbine engine comprising a combustion chamber, for combustion of fuel and compressed air therein, at least one turbine having turbine blades arranged to be driven in rotation by combustion gases from the combustion chamber, a compressor rotatably driven by the turbine or a further turbine for supplying compressed air to the or each combustion chamber and discharge means defining first and second channels for discharging combustion gases from the or a said combustion chamber, the first channel leading to the compressor-driving turbine and the second channel bypassing the compressor-driving turbine, and regulating means for regulating the relative proportions of combustion gases discharged along the first and second channels.

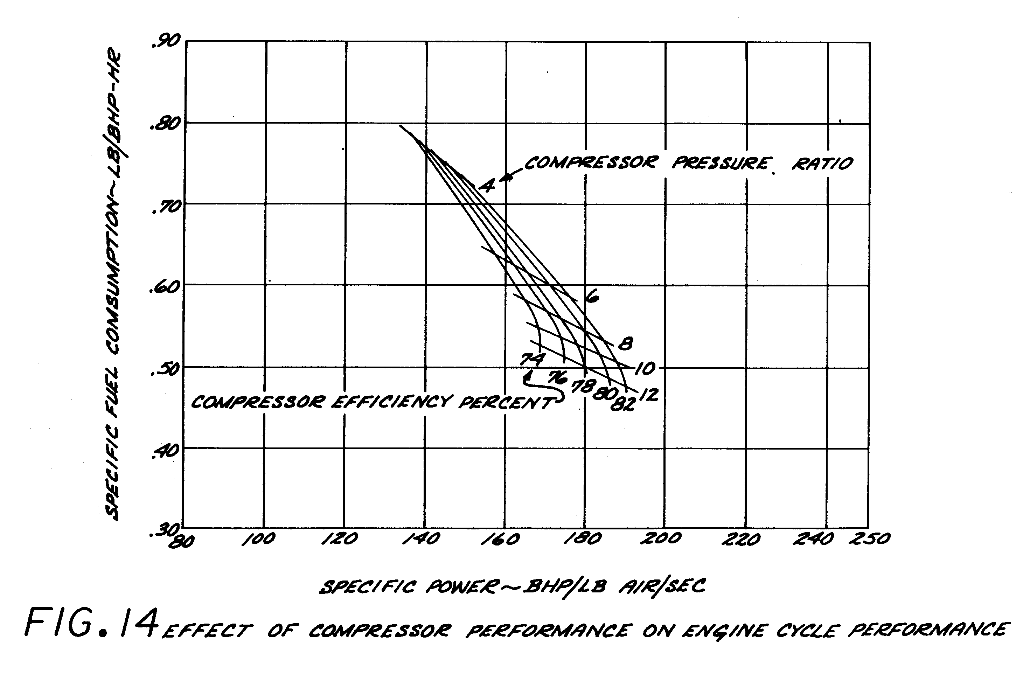

One obstacle in the evolution of the gas turbine engine is the inability to provide a sufficiently high and constant pressure ratio for the compressor without unduly increasing the engine's size and cost. The graph of FIG. 14 of the accompanying drawings shows the effects of the compressor's pressure ratio and efficiency on the engine's specific fuel and air consumption.
Although an increase in the pressure ratio at a given efficiency increases the engine's specific power, a more significant effect is the reduction in specific fuel consumption.

The dramatic variation in specific fuel consumption as a function of pressure ratio is, in fact, the major disadvantage of the gas turbine engine and the Brayton cycle it follows. The engine is therefore generally unsuited for applications where power and speed are variable. It has ordinarily been used only in applications where the requirements for power and speed are substantially constant.

Another obstacle in the evolution of gas turbine engines is the limited heat resistance of the engine's fixed vanes and turbine blades. Complete combustion of petroleum fuels at a stoichiometric ratio with air results in a combustion gas temperature near 4000 degrees F (or 2200 degrees C). However, the engine components mentioned above cannot ordinarily be heated above about 2300 degrees F (or 1200 degrees C), without incurring damage. The usual solution to this overheating problem is to dilute the combustion gases with an excess of compressed air, typically three to four times as much air as is required for stoichiometric combustion with the fuel. This dilution reduces the temperature of the combustion gases below the 2300 degree F limit, but unfortunately requires power to compress and deliver the additional air and also significantly increases the engine's size.

An afterburner can be used to fully combust the dilution air mixed in with the combustion gases. This afterburner is located downstream of the engine's turbine, however, such that the pressure of the air delivered to it has been significantly reduced by passage through the turbine, and the afterburner's efficiency is consequently very low. The afterburner is therefore suitable for use in only very limited circumstances, for relatively short time durations, when additional power is required.

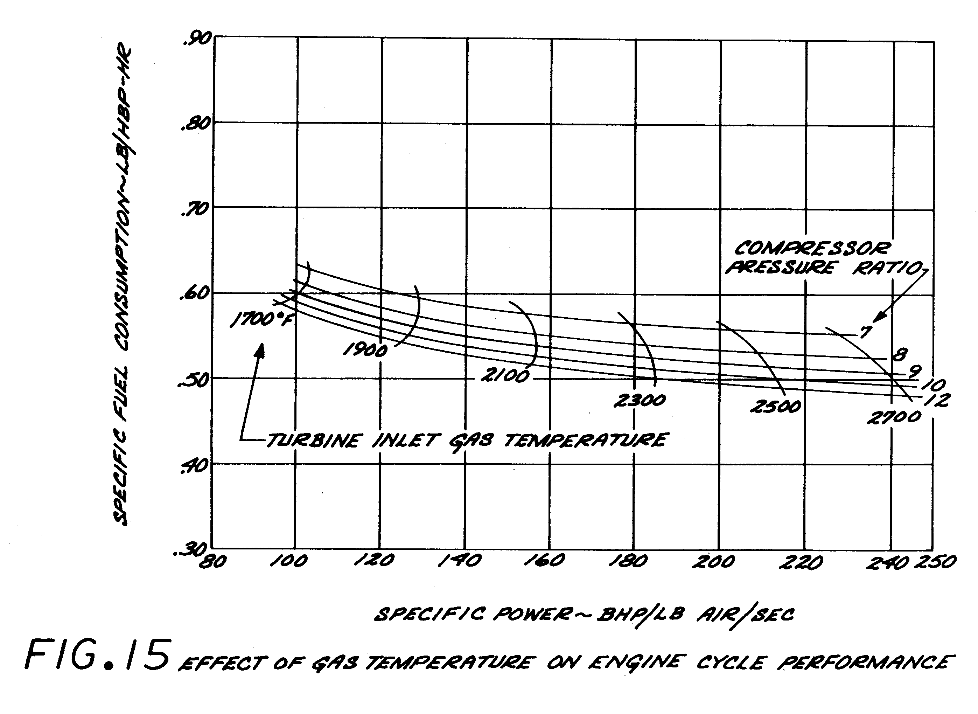

The desire to operate at higher combustion gas temperatures is longstanding. Improved metallurgy and fabrication techniques have permitted operation at somewhat higher temperatures, but there is still significant room for further improvement. The graph of FIG. 15 shows that increasing the combustion gas temperature at the turbine inlet merely 600 degrees F, from 1700 degrees F to 2300 degrees F, nearly doubles the power obtained per pound of air flow.

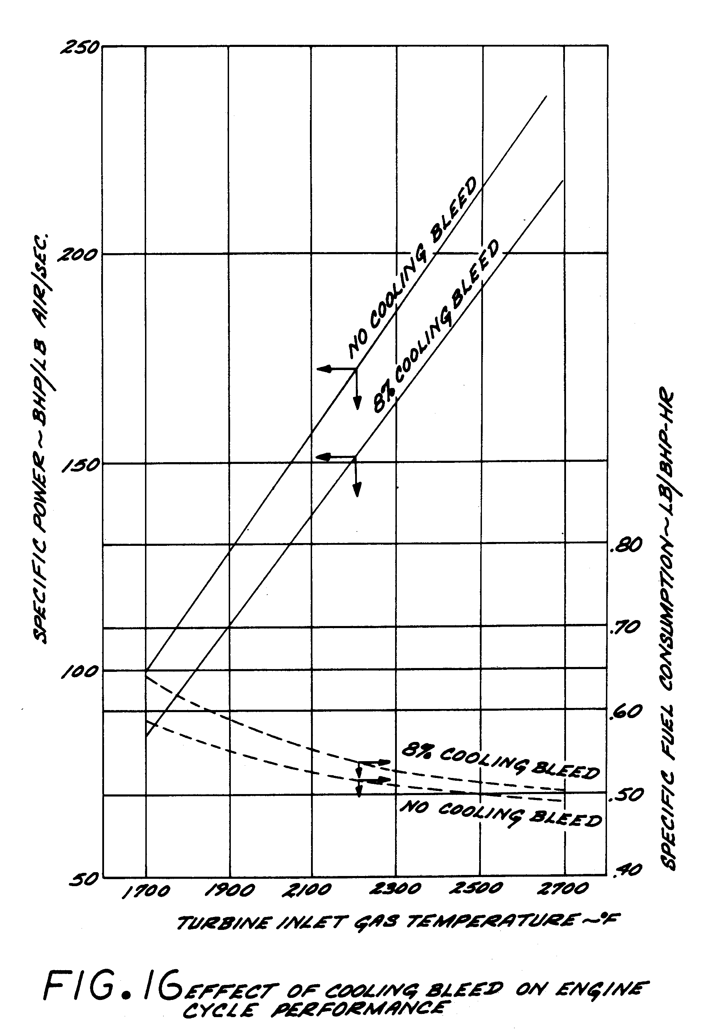

One technique proposed for permitting engine operation at temperatures of about 2300 degrees F involves cooling the turbine shrouding, stator blades and rotor blades using air diverted from the engine's compressor. As shown in the graph of FIG. 16, this leades to inefficiencies in the thermal cycle, since a portion of the compressed air (probably about eight percent) bypasses the engine's combustion chamber.

It should therefore be appreciated that there is a significant need for a gas turbine engine that avoids the problems identified above. In particular, there is a need for on engine that combusts fuel and air at a stoichiometric ratio and that can operate at maximum efficiency for a wide range of loads.

According to the present invention, a gas turbine engine of the kind known from US-A-2,095,991 is characterised in that the turbine blades of the turbine or at least one of the turbines are formed with cooling passageways which terminate in outlet ports at the outer peripheries of the blades, the combustion chamber or one of the cumbustion chambers is annular and surrounds the turbine formed with said passageways the outlet ports of the turbine blades of which are arranged to discharge liquid into the combustion chamber.

Thus, a gas turbine engine incorporating the invention includes a combustion chamber, a turbine rotatably driven by the combustion gases discharged from the combustion chamber, and a compressor rotatably driven by the turbine for compressing air and directing it into the combustion chamber. The engine discharges the combustion gases through two channels, a first channel directing the gases through the turbine and a second channel directing the gases along a path that bypasses the turbine. Regulating means regulates the relative proportions of the gases that are discharged through the respective channels. In several embodiments of the invention, this regulation maintains the energy of the gases discharged through the turbine at a substantially constant value, such that the turbine is rotated at a substantially constant angular velocity, regardless of the engine load. This drives the compressor at a correspondingly constant angular velocity, which thereby provides compressed air at a substantially constant pressure and flow rate. The energy of the high-pressure combustion gases discharged through the second channel is controllably variable and completely available to drive the variable engine load.

Fuel injection means injects an amount of fuel into the combustion chamber that varies in accordance with the engine load. Sufficient fuel is injected to combust with the air at a stoichiometric ratio, at least with respect to the portion of the combustion gases discharged through the second channel, which bypasses the turbine. The entire amount of injected fuel can combust at a stoichiometric level, including the portion that produces combustion gases discharged through the first channel, i.e., to the turbine, since the engine further includes means for cooling the hot engine parts exposed to those gases, e.g., by internal cooling with liquid and air.

The regulating means for regulating the discharge of combustion gases through the respective first and second channels includes valve means for controllably adjusting the minimum cross-sectional size of the second channel. In several preferred embodiments, this includes an axially-movable ceramic ring disposed in the second channel, and means for controllably moving the ring axially in the channel.

The combustion gases discharged through the first and second channels preferably rejoin and are mixed together in a common expansion duct. This re-heats the portion of the gases discharged through the first channel, i.e., through the turbine. The engine can further include a second turbine driven by the mixed gases in the common expansion duct, to drive a variable load. Alternatively, the engine can further include a nozzle for discharging the mixed gases and providing jet propulsion. In the latter case, ram means can also be included for directing high pressure air directly to the combustion chamber, bypassing the compressor, whenever the engine velocity, relative to the surrounding air, exceeds a predetermined value.

In one embodiment of the invention, the engine further includes a second combustion chamber, located downstream of the turbine. Second regulating means regulates the relative proportions of compressed air directed into the two combustion chambres, such that the second chamber receives a selected amount of air directly from the compressor as well as combustion gases from the first chamber, via either or both of the first and second channels.

In another embodiment of the invention, the regulating means maintains the maximum temperature of the combustion gases at a substantially constant value for all levels of the variable load. This provides a high thermal efficiency even while driving relatively small loads. In this embodiment, the regulating means includes throttle means for controllably adjusting the flow rate of the compressed air, in direct relationship with the magnitude of the variable load. Valve means are also included for controllably adjusting the relative proportion of combustion gases discharged through the first channel, and thus the turbine, in inverse relationship with the magnitude of the variable load. Thus, at relatively small power levels, the compressor provide a high compression ratio, but low flow rate, whereas at relatively large power levels, the compressor provides a low compression ratio, but high flow rate. The throttle means can include a plurality of vanes in the compressor inlet, and the valve means can include a sliding ring in the path of the discharged combustion gases.

In yet another embodiment of the invention, the gas turbine engine further includes a second combustion chamber operating in parallel with the first combustion chamber. The combustion gases produced in each chamber are utilized to drive separate variable loads. Means are also included for directing selected proportions of the compressed air from the compressor to the respective combustion chambers, in accordance with the relative magnitudes of the two variable loads. In this embodiment, the compressor preferably includes two counter-rotating rotors, with a turbine for the gases from the first combustion chamber driving one rotor, and a turbine for the gases from the second combustion chamber driving the other rotor. Both turbines can operate at controllably-variable speeds, such that the compressor provides a selected pressure ratio.

In a separate, independent aspect of the invention, each turbine blade includes a narrow passageway in its interior, terminating in an outlet port, and injection means injects both cooling liquid and cooling air into the passageway. This produces a turbulent mix of liquid and air in the passageway that enhances the absorption of heat from the blade, permitting operation of the engine at significantly higher combustion gas temperatures.

The combustion chamber is perferably annular and configured to encircle the turbine, with the remote tips of the turbine blades disposed in direct communication with the combustion chamber. The passageway outlet ports are located at the remote tips of the blades, such that the turbulent mix of liquid and air is ejected directly into the combustion chamber. The cooling liquid preferably includes fuel, such that the absorbed heat is recovered in the combustion chamber, and an efficient combustion is achieved due to the turbulent premixing of the fuel and the air.

Each turbine blade preferably includes at least two narrow passageways, with cooling liquid being injected into one and cooling air into the other. A plurality of lateral passageways interconnect the first two, such that the liquid passes from its passageway to the air passageway, where the two mix together. The cooling liquid preferably moves through its passageway substantially under the influence only of centrifugal force, and the air is preferably supplied by the engine compressor.

In one embodiment, suitable for large turbines, each blade includes a core having the passageways formed in it and a thin skin enclosing the core. The core provides substantially all of the blade's structural strength. Each blade preferably includes a number of radially-aligned first passageways, for the injected liquid, and a greater number of radially-aligned second passageways, for the injected air and liquid/air mix. The air passageways surround the liquid passageways, and are ideally in the form of channels in the outer surface of the blade core.

In another embodiment of the turbine blade, suitable for relatively small turbines, each blade includes an inner tube and a surrounding thin skin. The liquid passageway is located in the inner tube and air/mix passageway is located between the tube and the skin. The cooling liquid is sprayed through holes in the tube onto the inwardly-facing surface of the blade skin. The tube and the skin of each blade preferably each include fire-tree segments for use in securing them to each other and to the turbine disk. In addition, each blade is preferably formed in a process in which two blade halves are welded together, with the inner tube holes being drilled prior to the welding.

In some embodiments of the invention, the cooling liquid further includes water, such that high-speed, superheated steam is ejected into the combustion chamber. This steam dilutes the combustion gases, thus lowering its temperature, and also provides a Rankine cycle by internal cogeneration.

The result is a compact structure that simultaneously implements both a Brayton cycle and a Rankine cycle. The engine can further include means for controllably adjusting the relative amounts of liquid fuel and water injected as cooling liquid into the turbine blades. Alternatively, the cooling liquid can include water, only.

The fixed stator vanes located upstream of the turbine blades should likewise include interior cooling passageways, since they are heated by the combustion gases to a similar extent. Since these vanes do not rotate, the centrifugal force is not available and the cooling liquid must be injected into the passageways under pressure.

The amount by which the turbine blades and stator vanes must be cooled depends, of course, on the load imposed on the engine and thus the temperature of the combustion gases. Under full load, a maximum amount of cooling liquid is injected, whereas under relatively small loads, only air is injected.

In another, independent apsect of the invention, the engine's thermal efficiency is enhanced by cooling the compressor and thus the compressed air. In particular, this cooling is achieved by encircling the compressor with a jacket containing a suitable cryogenic fuel, the heated fuel then being injected into the combustion chamber such that the heat is recovered in the thermal process. In addition, liquid oxygen or the like can be sprayed directly onto the compressor blades and enrich the engine's oxygenation capacity.

The first rotor preferably includes an initial inducer region and a final impeller region, and the second rotor preferably includes an initial diffuser region, an intermediate inducer region, and a final impeller region. An annular channel can be located between the two rotors, such that air delivered from the first rotor whirls in the channel before reaching the second rotor. The two rotors ideally are driven at substantially constant angular velocities over a wide range of engine loads, such that the compressor operates at a constant, high efficiency.

The invention will now be further described in more detail by way of example with reference to the drawings, in which:

FIG. 1 is a cross-sectional view of a gas turbine engine operating as a jet, with a single combustion chamber but two parallel cycles, one in which combustion gases are directed through a turbine and the other in which combustion gases bypass the turbine;

FIG. 2 is a cross-sectional view of a gas turbine engine having a combustion chamber similar to that of FIG. 1, but driving a free turbine and including a counter-rotating inducer/compressor;

FIG. 3 is a cross-sectional view of a gas turbine engine embodying the invention and further including isothermic compression and internal cogeneration to further provide a Rankine cycle;

FIG. 4 is a cross-sectional view of a gas turbine engine embodying the invention and further including a turbo-compressor having first and second counter-rotating axial-radial impellers, with a pre-whirl channel located between them and with the second impeller also functioning as a counter-rotating diffuser for the first impeller;

FIG. 5 is a cross-sectional view of a gas turbine engine embodying the invention and further being convertible to operation as a ramjet;

FIG. 6 is a cross-sectional view of a gas turbine engine embodying the invention and further including an alternative configuration for a turbo-compressor having two counter-rotating radial impellers;

FIG. 7 is a cross-sectional view of a gas turbine engine embodying the invention and further including a turbo-fan bypass;

FIG. 8 is a cross-sectional view of a gas turbine engine embodying the invention and further including a second combustion chamber downstream of the turbine and a valve for channeling selected proportions of compressed air to the respective first and second combustion chambers;

FIG. 9 is a cross-sectional view of a gas turbine engine embodying the invention and including a compressor regulated to provide a pressure ratio that varies inversely with the engine load;

FIG. 10 is a cross-sectional view of a gas turbine engine embodying the invention and including a single compressor supplying air to two separate combustion chambers, each operatively connected to a separate variable load;

FIG. 11 is a cross-sectional view of one embodiment of a turbine blade and stator blade having internal passageways through which cooling liquid and air are channeled and mixed, to cool the blades;

FIG. 12 is a sectional perspective view of another embodiment of a turbine blade having internal passageways through which cooling liquid and air are channeled and mixed, to cool the blade;

FIG. 13 is another sectional prospective view of the turbine blade of FIG. 12.

FIG. 14 is a graph showing the relationship between compressor pressure ratio and overall engine performance;

FIG. 15 is a graph showing the relationship between turbine inlet temperature and power output per pound of air flow; and

FIG. 16 is a graph showing the drop in engine efficiency caused by diverting air to cool the turbine shrouding, stator blades and rotor blades

## DESCRIPTION OF THE PREFERRED EMBODIMENTS

With reference now to the drawings, for purposes of illustration, there are shown a number of alternative embodiments of a gas turbine engine embodying the present invention. Although each embodiment has its own unique features, most of them have substantial similarity with each other. In all of the drawings, corresponding elements are identified by the same reference numerals.

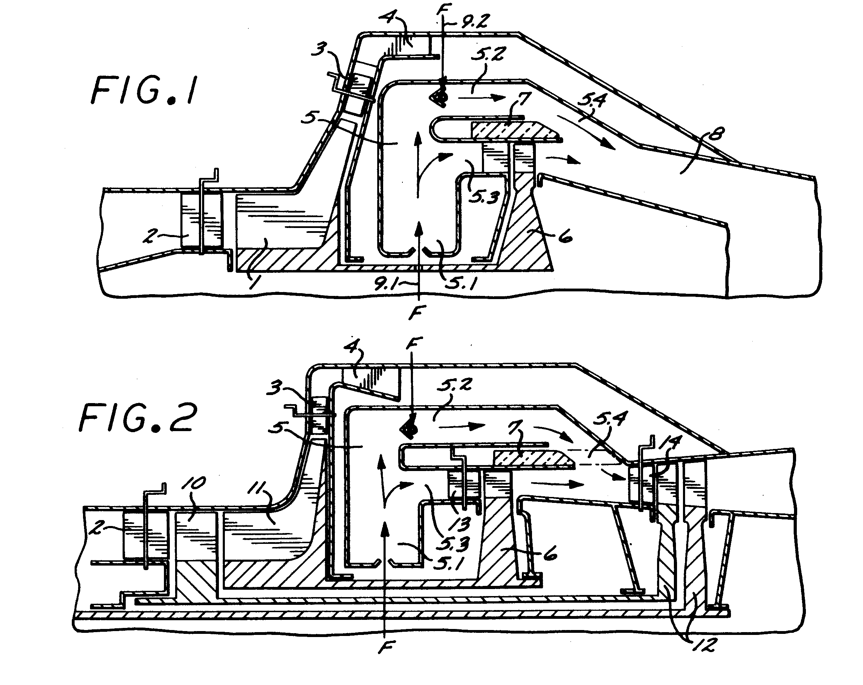

FIG. 1 depicts one example of a gas turbine engine functioning as a turbo-jet. It includes a compressor 1, with axial and radial impellers, an adjustable pre-whirl blade 2, an adjustable diffuser 3 and a fixed diffuser 4. A combustion chamber 5, which includes a primary combustion zone 5.1 and a secondary combustion zone 5.2, receives compressed air from the compressor and burns it with injected fuel. The resulting combustion gases are discharged through a first, constant-energy path 5.3 to a turbine 6, as well as a second, variable-energy path 5.4, which bypasses the turbine. The turbine drives the compressor.

An axially-slidable ring 7 formed of a suitable ceramic material controls the cross-sectional area of the second discharge path 5.4 so as to regulate the enregy of the combustion gases discharged through the first path 5.3 to a predetermined, substantially constant value. The gases discharged through the first and second paths join together in a final reaction tube 8, for discharge from the engine. A first fuel supply 9.1 injects fuel for burning in the primary combustion zone 5.1, and a second fuel supply 9.2 injects fuel for burning in the secondary combustion zone 5.2.

Since the sliding ring 7 regulates the energy of the combustion gases discharged through the first path 5.3 and the turbine 6 to a constant value, the turbine and thus the compressor 1 are driven at substantially constant angular velocities, regardless of the magnitude of the engine load. The compressor can thereby be operated at a constant, high efficiency for all engine loads.

FIG. 2 depicts another example of a gas turbine engine, which drives a turbo-shaft or turbo-fan. The engine is similar to that of FIG. 1, except that it further includes a counter-rotating compressor, with an axial stage 10 and a radial stage 11. The combustion gases discharged along the two paths 5.3 and 5.4 from the combustion chamber 5 drive a free power turbine 12, with counter-rotating rotors. Adjustable guide vanes 13 are provided for the first turbine 6 and adjustable guide vanes 14 are provided for the free power turbine.

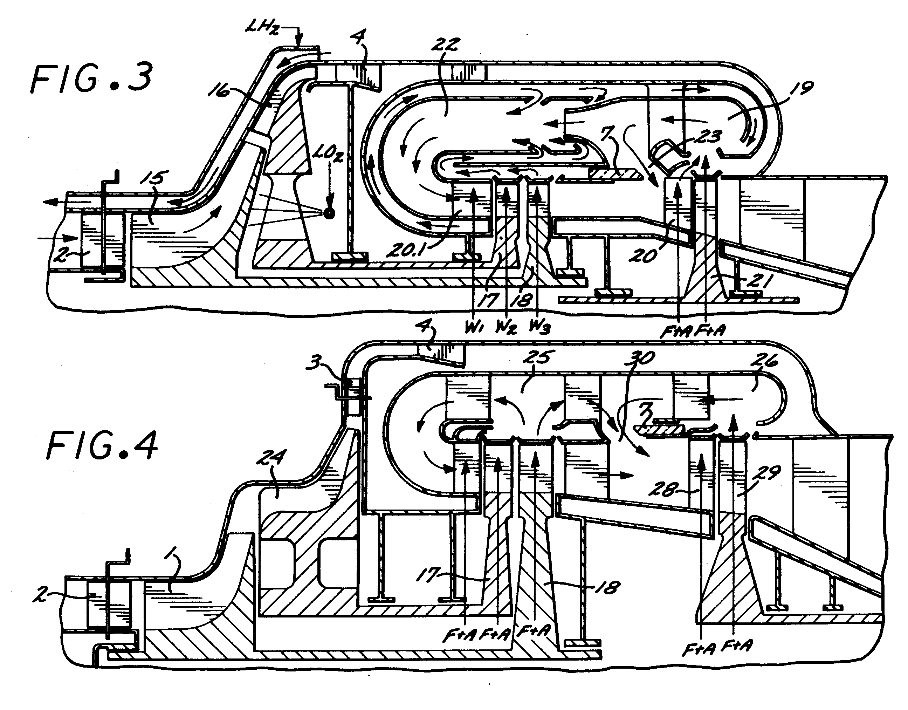

Another example of a gas turbine engine embodying the invention is depicted in FIG. 3. It includes a counter-rotating compressor having an internal radial impeller 15 and a concentric external radial impeller 16, driven by counter-rotating turbines 17 and 18, respectively. The external impeller also functions as a diffuser for the internal impeller, transforming the kinetic energy of the air accelerated by the internal impeller into potential energy, or pressure.

The blades of the turbines 17 and 18, as well as fixed vanes 20.1 located upstream of the turbines are cooled by the injection of cooling liquids, preferably water, into narrow, internal passageways formed within them. This heat transfer produces high-speed, superheated steam for ejection into a dilution zone/combustion chamber 22 that encircles the turbines. The steam moves in counterflow along the walls of the chamber and acts like a secondary dilution fluid, to reduce the temperature of the combustion gases to a level compatible with the engine materials. In addition, the engine follows both a Brayton cycle and a Rankine cycle, with an internal cogeneration of steam and combustion gases.

As in the embodiment of FIGS. 1 and 2, the engine of FIG. 3 includes an axially-movable, ceramic ring 7 for use in adjusting the size of a supplementary discharge path 23. The adjustment is made so as to regulate the energy of the combustion gases discharged the turbines 17 and 18 to a substantially constant value. The gases discharged through the two paths join together and then drive a free power turbine 21 connected to a variable load. Liquid fuel and air are supplied to the combustion chamber 19 surrounding the free turbine through narrow passageways located in the blades 21 of the free turbine and in vanes 20 of the fixed stator located upstream of the free turbine. This cools the blades and vanes just like the injected water cools the blades of the turbines 17 and 18.

In another feature of the engine depicted in FIG. 3, the counter-rotating compressor is refrigerated on its outside and inside by cryogenic fluids, preferably a liquid fuel and a special oxidant, respectively. This provides a desirable isothermal compression of the air.

FIG. 4 depicts turbo-shaft or turbo-fan engine embodying the invention, with a compressor that includes two counter-rotating impellers. The second impeller 24 functions at supersonic speeds simultaneously as a diffuser for the first impeller, an inducer, and a radial impeller. An annular channel is located between the two impellers, and the air accelerated by the first impeller whirls in this channel before reaching the second impeller. In addition, the diffuser portion of the second impeller is oriented generally axially.

The turbine blades and stator vanes of the engine of FIG. 4 are all cooled by the injection of liquid fuel and air into their internal passageways. In particular, the blades of the turbines 17 and 18 deliver premixed and superheated fuel and air to a primary combustion zone 25, and the blades of a stator 28 and a free turbine 29 deliver premixed and superheated fuel and air to a secondary combustion zone 26. The sliding ring 7 controls a variable exit 30, through which the variable-energy combustion gases flow, so as to stabilize the energy of the combustion gases discharged through the turbines 17 and 18.

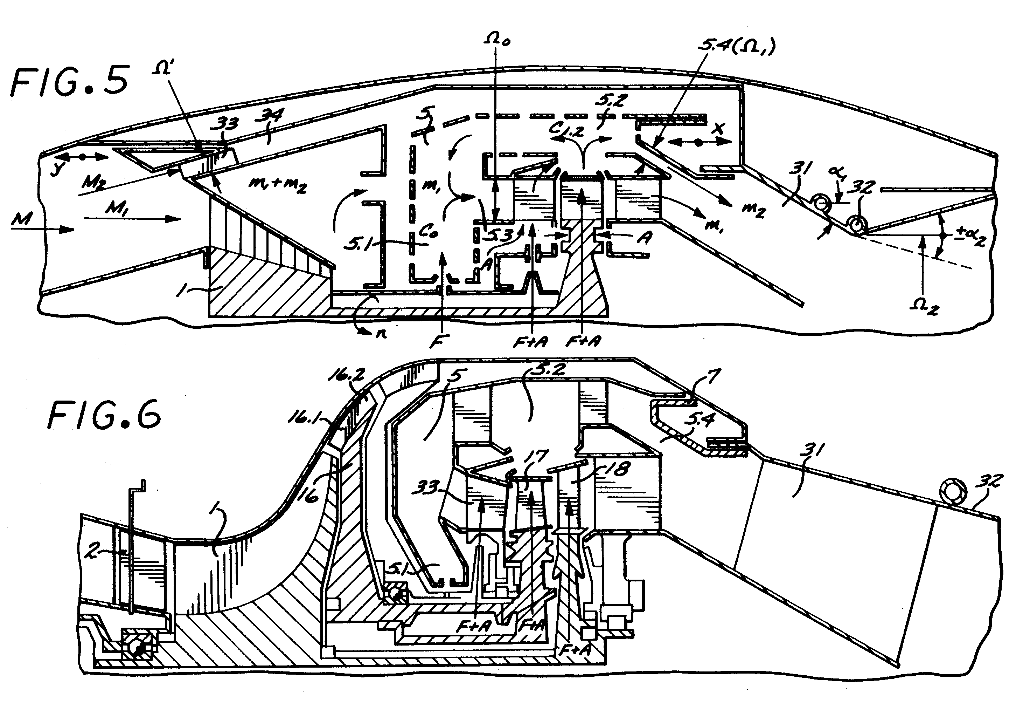

FIG. 5 depicts a turbo-jet that is convertible into a ramjet, which is another embodiment of the present invention. The engine includes two alternative paths for injecting high pressure air into the combustion chamber 5. One path is through a compressor 1, and the other path 34 bypasses the compressor and is used only when the engine has reached a sufficiently high air speed, in which case dynamic compression can be achieved. A variable-geometry intake vane 33 selectively opens the latter path only when a high air speed has been reached. A common expansion tube 31, controlled by a bidimensional, variable geometry tube 32, directs the combustion gases out of the engine and optimizes the exhaust speed relative to the air speed.

FIG. 6 depicts a gas turbine engine that includes a first radial impeller 1 and a second radial diffuser/impeller 16, driven in counter-rotation by turbines 17 and 18. The second radial diffuser/impeller 16 includes a diffuser section 16.1, for increasing the pressure of the air accelerated by the first impeller 1, and an impeller section 16.2, for further accelerating the air.

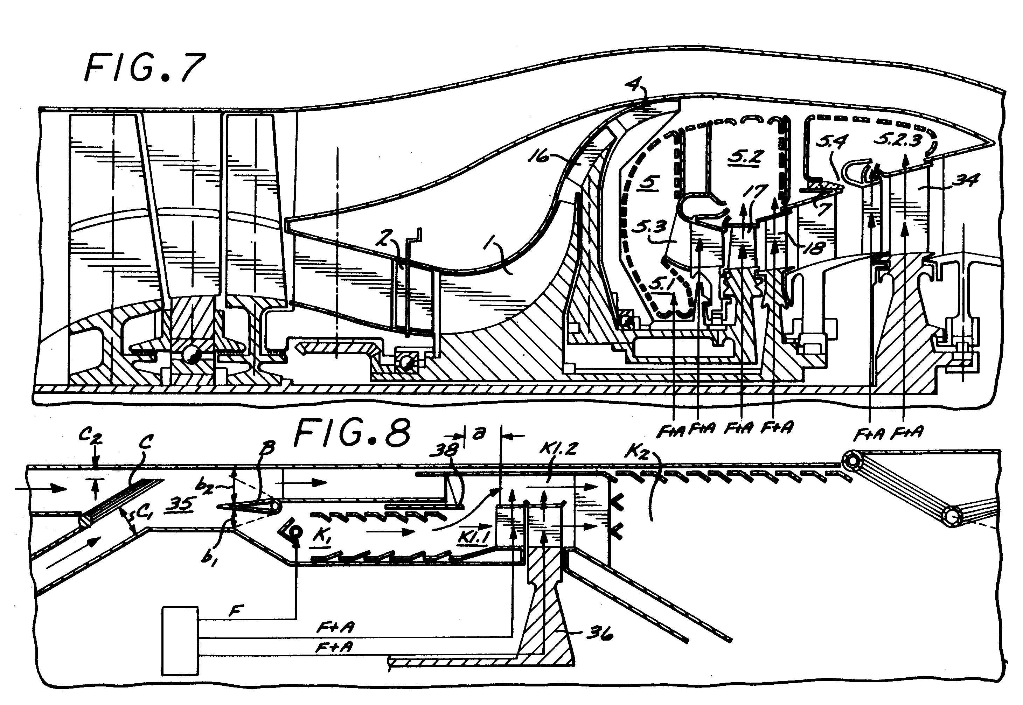

FIG. 7 depicts a ducted turbo-fan gas turbine engine that includes a single combustion chamber 5 with several separate zones 5.1, 5.2, 5.2.3 and 5.4. All of the turbines 17, 18 and 34, as well as their associated stators are cooled by an injection of cooling liquid and air into narrow passageways formed within them. The liquid and air are thoroughly mixed and thereafter ejected as high-speed, superheated vapor into the combustion chamber.

Still another example of a gas turbine embodying the present invention is shown in FIG. 8. A compressor (not shown) supplies compressed air 35 for direction along two separate paths by a valve B. The portion directed through a section $b_1$ enters an initial combustion chamber $k_1$, where it is combusted with injected fuel $F_1$. The resulting combustion gases are directed into a constant energy path $K_{1.1}$, to drive a turbine 36, and into a variable-energy path $K_{1.2}$, for entry into a final combustion chamber $K_2$. A cylindrical sliding valve 38 controls the size of the latter path $K_{1.2}$, to stabilize the energy of the gases discharged through the first path $K_{1.1}$, in the manner described earlier.

The final combustion chamber $k_2$ in the engine of FIG. 8 receives compressed air through the section $b_2$, as well as combustion gases through the variable-energy path $k_{1,2}$ and the constant-energy path $k_{1,2}$, via the turbine 36. A premix of fuel and air is supplied to the final combustion chamber via internal passageways in the blades of the turvine and in its corresponding stator vanes. As described earlier, this fuel cools the blades and vanes and reintroduces the heat back into the thermal cycle.

The engine of FIG. 8 further includes an additional valve C for selecting the source of the compressed air 35. At subsonic speeds, the section $c_1$ is open and the compressed air is supplied by the compressor, whereas at supersonic speeds, the section $c_2$ is open and the compressed air is supplied by dynamic compression, as in a ramjet.

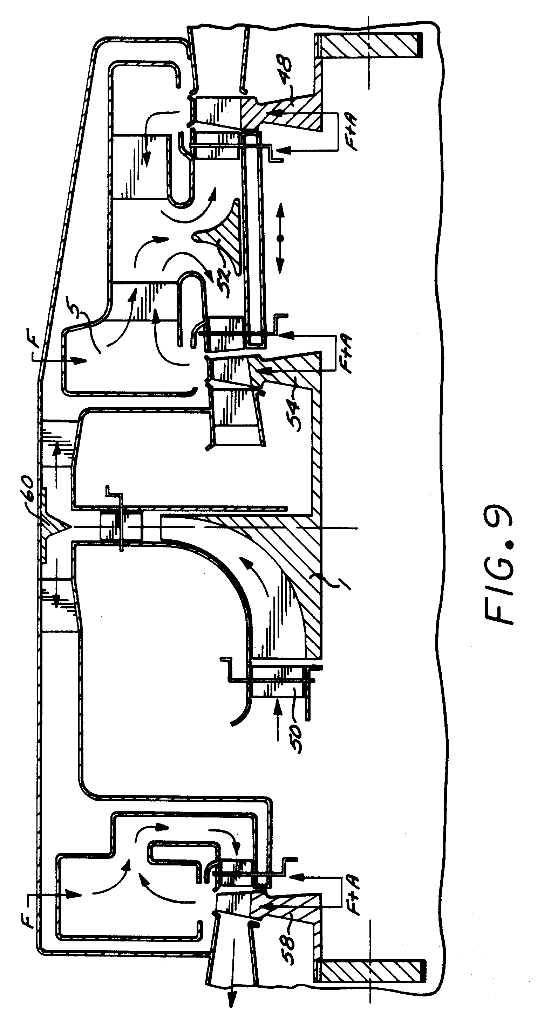

FIG. 9 depicts still another example of a gas turbine engine embodying the present invention. In this embodiment, the compressor 1 is regulated not to provide a constant pressure ratio (as in the previous embodiments), but rather to provide a pressure ratio that varies inversely with a variable engine load, which is driven by a free turbine 48. In particular, the maximum temperature of the combustion gases in the combustion chamber 5 is regulated to be at a substantially constant value for all loads. The engine includes a throttle 50 located in the compressor inlet, for controllably adjusting the compressor flow rate in direct relationship with the load, and a slidable valve 52 located in the combustion chamber discharge path, for controllably adjusting the proportion of the combustion gases channeled through a turbine 54 that drives the compressor, in inverse relationship with the load. Thus, at relatively small loads, the compressor's pressure ratio is high, whereas at relatively large loads, the compressor's pressure ratio is low but the flow rate is high.

In another important feature of the engine embodiment of FIG. 9, the engine further includes a second combustion chamber 56 arranged to drive a free turbine 58 connected to a separate variable load. This second combustion chamber receives compressed air from the same compressor 1, and a deflector valve 60 controls the relative proportions of the compressed air directed to the respective combustion chambers 5 and 56, depending on the relative magnitudes of the two variable loads.

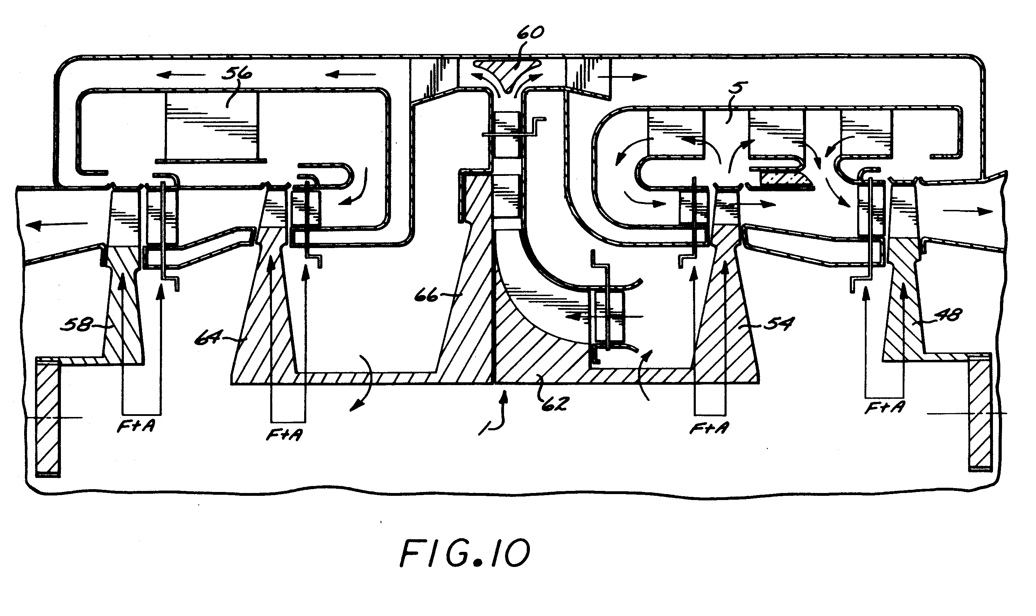

FIG. 10 depicts a final example of the invention, this one including a single compressor and two combustion chambers 5 and 56, each arranged to drive a separate variable load. The combustion chamber 5 is associated with a first turbine 54, for driving one rotor 62 of the compressor, and a second turbine 48, for driving one of the variable loads. Similarly, the second combustion chamber 56 is associated with the first turbine 64, for driving another rotor 66 of the compressor, and a second turbine 58, for driving the other variable load. A deflector valve 60 located at the compressor outlet is controllably movable to adjust the relative proportions of the compressed air directed to the two combustion chambers, in accordance with the magnitudes of the two variable loads.

The two rotors 62 and 66 of the compressor 1 counter-rotate with respect to each other, to increase their relative speed. In addition, as in the compressor of FIG. 9, the rotor speeds can be controllably varied, to provide a higher pressure ratio at relatively small loads, thus improving the engine efficiency at such small loads.

In most of the gas turbine engine embodiments described above, the turbine blades are cooled by injection of both cooling liquid and cooling air into narrow internal passageways formed within them. The liquid, which can include fuel, forms a turbulent pre-mix with the air, which is ejected from ports located at the remote tips of the blades directly into the surrounding combustion chamber. This turbulent pre-mix absorbs significant amounts of heat from the blades, and reintroduces this heat back into the thermal cycle. The internal blade cooling also permits operation of the engine at higher temperatures, even temperatures produced at the stoichiometric ratio of the fuel and air.

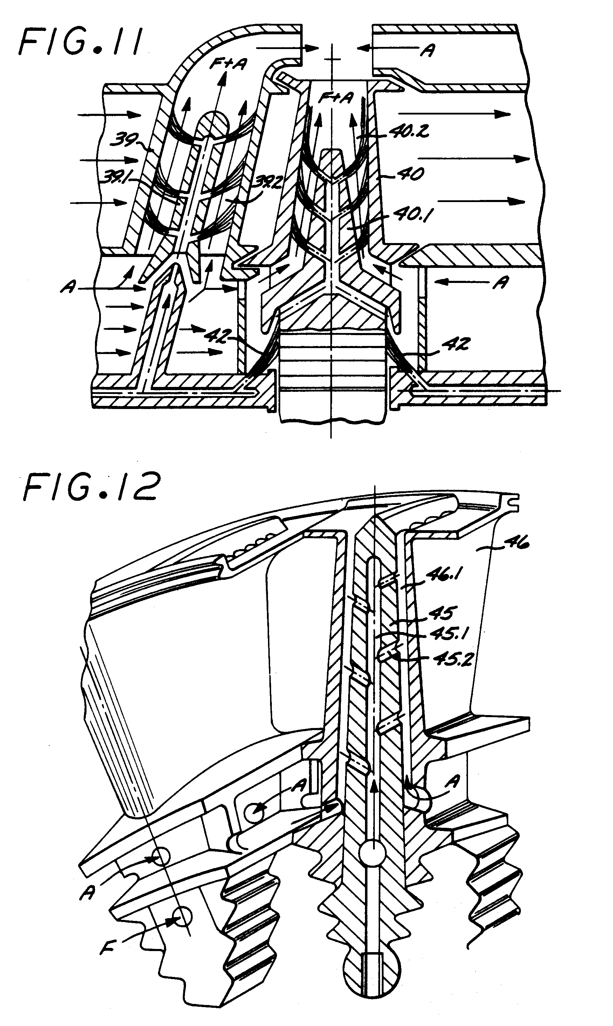

FIG. 11 is a cross-sectional view of one suitable configuration for the internal pasageways for a stator vane 39 and a turbine blade 40. The vane 39 includes a central liquid sprinkler 39.1 surrounded by an air channel 39.2, and the blade 40 similarly includes a central liquid sprinkler 40.1 surrounded by an air channel 40.2. Cooling liquid is sprayed from a plurality of small holes drilled in the sprinklers onto the inner surface of on encircling metallic skin, to absorb heat supplied by the combustion gases. The liquid and air then mix together to form a rich, turbulent pre-mix for ejection into the surrounding combustion chamber. At low power levels, when the combustion gases are not as hot, only air need be channeled through the blades and vanes. This structure is particularly suitable for use in relatively small engines, where the turbine blade skin, itself, can provide sufficient structural strength.

The stator vanes 39 and turbine blades 40 are each preferably formed of two separate parts, which can be secured to each other by any suitable means, such as electron beam or laser welding. Before such welding, the spray holes are formed in the sprinklers, for example, by drilling.

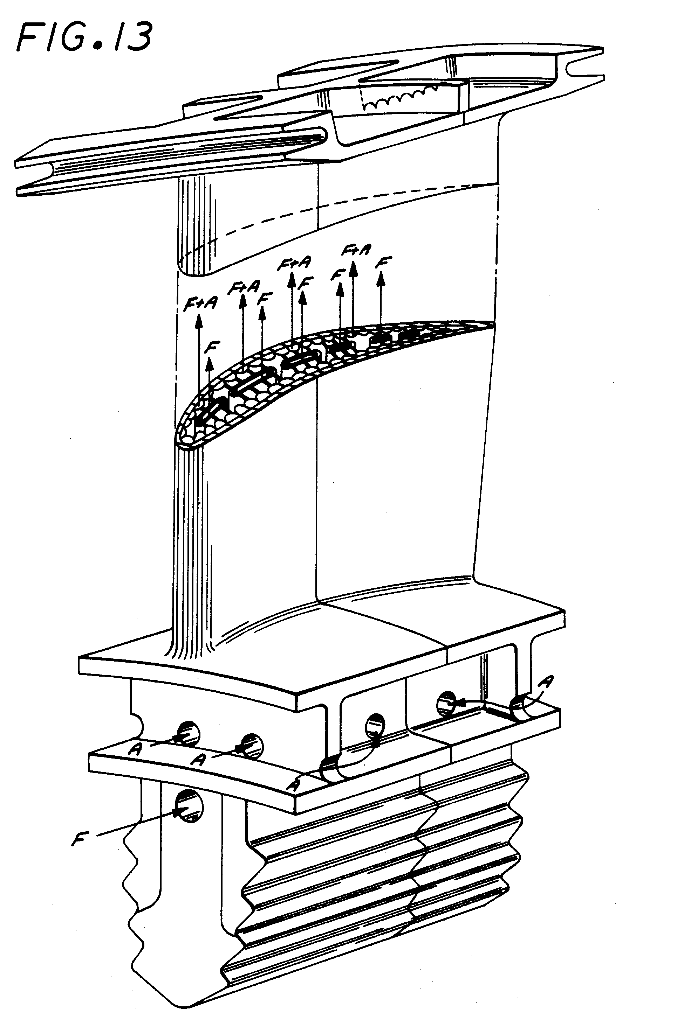

FIGS. 12 and 13 depict an alternative turbine blade structure, suitable for use in relatively large turbines. The blade includes an inner core 45, which provides the blade's structural strength, and an overlying skin 46. Liquid cooling channels 45.1 are formed in the interior of the inner core, and the air cooling channels 46.1 are formed as channels in the outside surface of the core. Calibrated transverse passageways or orifices 45.2 interconnect the respective liquid and air channels, such that the injected liquid is sprayed against the hot inner surface of the skin 46. The skin is thus in direct contact with the hot combustion gases on its outer surface and with the cooling liquid and air on its inner surface. Forming the skin of a thin metallic material with high heat resistance minimizes the heat stress it experiences. The turbulent mix of liquid and air provides extremely high heat absorption from the blade skin.

It should be appreciated from the foregoing description that the present invention provides a gas turbine engine that can operate at a very high efficiency over a wide range of load conditions. In one important feature of the invention, combustion gases are discharged along two paths, one with constant energy and the other with energy that varies in accordance with the engine load. The contant energy discharge drives a turbine at a constant speed that, in turn, operates a compressor at a constant, high efficiency. Alternatively, the compressor can be driven at a controllably-variable speed, such that it provides a pressure ratio that vaaries inversely with engine load. In this case, the engine operates at a high efficiency for all loads. The combustion can occur at a stoichiometric ratio of fuel and air, with the turbine blades being protected from the vastly increased combustion gas temperature by an internal array of passageways through which cooling liquid, e.g., liquid fuel, and air are channeled. The fuel and air mix together to form a rich, turbulent pre-mix for ejection directly into the surrounding combustion chamber. In yet another embodiment of the invention, the compressor that supplies compressed air to the combustion chamber includes two counter-rotating radial impellers, with the second impeller further functioning as a diffuser for the first impeller.

It should also be appreciated from the foregoing description that other embodiments provide an efficient cogeneration process that produces steam internally, within the turbine and stator blades and within the combustion chamber, rather than externally. This provides an enormous reduction in the size, weight and cost of the engine. In addition, the isothermal compression feature, as well as partial isothermal re-heating or expansion feature, provide improved maximum power levels and efficiency. Further, all of the embodiments provide reduced specific fuel consumption, at all loads, making practical the use of the engine in numerous variable-load applications, heretofore not practical for gas turbine engines.

Although the invention has been described in detail with reference to the presently-preferred embodiments, it will be understood by those of ordinary skill in the art that various modifications can be made without departing from the invention. Accordingly, the invention is defined only by the following claims.

**Claims**

1. A gas turbine engine comprising at least one combustion chamber (5), for combustion of fuel and compressed air therein, at least one turbine (18) having turbine blades arranged to be driven in rotation by combustion gases from the combustion chamber (5), a compressor (1) rotatably driven by the turbine or a further turbine for supplying compressed air to the or each combustion chamber (5) and discharge means defining first and second channels (5.3,5.4) for discharging combustion gases from the or a said combustion chamber (5), the first channel leading to the compressor-driving turbine (18) and the second channel (5.4) bypassing the compressor-driving turbine, and regulating means (7) for regulating the relative proportions of combustion gases discharged along the first and second channels (5.3,5.4), characterised in that the turbine blades of the turbine or at least one of the turbines are formed with cooling passageways which terminate in outlet ports at the outer peripheries of the blades, and the combustion chamber (5) or one of the combustion chambers is annular and surrounds the turbine (18) formed with the said passageways the outlet ports of the turbine blades of which are arranged to discharge liquid into the said annular surrounding combustion chamber.

2. A gas turbine engine according to claim 1, characterised in that liquid fuel is supplied to the said passageways in the turbine blades.

3. A gas turbine engine as defined in claim 1 or 2, including a second turbine (21) connected to a variable load wherein the portion of the combustion gases discharged through the second channel (5.4), bypassing the first turbine (18), drives the second turbine (21) and the variable load.

4. A gas turbine engine as defined in any of claims 1 to 3, wherein the regulating means includes valve means (7) for regulating the relative cross-sectional sizes of the first and second channels.

5. A gas turbine engine as defined in claim 4, wherein the valve means (7) regulate the cross-sectional size of the second channel (5.4), which discharges combusion gases along the path that bypasses the turbine.

6. A gas turbine engine as defined in claims 4 or 5, wherein the valve means includes an axially-movable ring located between the first and second channels to regulate the relative cross-sectional sizes of the first and second channels.

7. A gas turbine engine as defined in any of claims 3 to 5, wherein the valve means includes a sliding ring (7) located in the path of the combustion gases being discharged from the combustion chamber (5), the sliding ring changing the relative sizes of the first and second discharge channels without substantially changing the combined cross-sectional size of the two channels.

8. A gas turbine engine as defined in any preceding claim, wherein the engine drives a variable load and the engine includes throttle means (50) for adjusting the flow rate of the compressed air directed by the compressor (1) into the combustion chamber (5).

9. A gas turbine engine as defined in claim 8, wherein the throttle means (50) includes a plurality of adjustable vanes located in the inlet of the compressor, the vanes also functioning to impart a pre-whirl to the air being directed into the compressor.

10. A gas turbine engine as defined in any preceding claim, including air channels for introducing air into the turbine passageways, to produce a turbulent mix of liquid and air within the passageways that enhances the absorption of heat from the blades, the heated mix of liquid and air thereafter being ejected through the outlet ports into the combustion chamber.

11. A gas turbine engine as defined in any of claims 2 to 10, wherein and including means for injecting water into the turbine passageways, so that such water cools the turbine and subsequently enters the combustion chamber via the injection ports as high-speed superheated steam, the steam diluting the combustion chamber via the outlet ports as high speed, superheated steam, the steam diluting the combustion gases, thus lowering its temperature, and also providing a Rankine cycle, by internal cogeneration and means for adjusting the relative amounts of air, liquid fuel and water injected into the turbine passageways.

12. A gas turbine engine as defined in any preceding claim, wherein the discharge means further includes a common expansion duct for mixing together the combustion gases discharged through the first and second channels (5.3,5.4), to re-heat the portion of the combustion gases discharged through the first channel (5.3) and the turbine (18).

13. A gas turbine engine as defined in claim 12, further including a second turbine (29) driven by the combustion gases mixed together in the common expansion duct, the second turbine driving a variable load.

14. A gas turbine engine as defined in claim 12 or 13, further including nozzle means (32) for discharging the combustion gases mixed together in the common expansion duct (31) such that the engine operates as a jet.

15. A gas turbine engine as defined in any preceding claim, including ram means (33) for directing high pressure air to the combustion chamber, bypassing the compressor (1) and means for selectively operating the ram means (33) whenever the velocity of the engine relative to the velocity of the air surrounding the engine reaches a predetermined value.

16. A gas turbine engine as defined in any of claims 1 to 14, and further including means defining a second combustion chamber (K$_2$), located downstream of the turbine (36) and second regulating means (38) for regulating the relative proportions of compressed air directed from the compressor directly to the two respective combustion chambers, the second combustion chamber receiving compressed air from the compressor as well as combustion gases from the first combustion chamber, via either or both of the first and second channels.

17. A gas turbine engine as defined in any preceding claim, wherein the compressor (1) includes cooling means for cooling the air as it is being compressed (Fig. 3).

18. A gas turbine engine as defined in claim 17, wherein the cooling means includes a cooling jacket, means for channeling a cooling liquid through the cooling jacket, and means for spraying a cooling oxidant (LO$_2$) into the compressor interior.

19. A gas turbine engine as defined in any preceding claim, including further a second turbine (48) connected to a first variable load and a third turbine (58) connected to a second variable load wherein the combustion gases discharged through the second channel, bypassing the first turbine (54), drive the second turbine (48) connected to the first variable load, the engine further includes means defining a second combustion chamber in which fuel and air are mixed together and burned to produce combustion gases, means for utilising the combustion gases produced in the second combustion chamber to drive the third turbine (58) connected to the second variable load and means (60) associated with the compressor for directing selected proportions of the compressed air to the respective first and second combustion chambers.

20. A gas turbine engine as defined in any preceding claim, wherein the compressor includes first and second counter-rotating rotors (62,66), the engine further includes a second compressor-driving turbine (64) rotatably driven by the combustion gases discharged from a second combustion chamber (56), and the first compressor rotor (62) is rotatably driven by the first turbine (54) and the second compressor rotor (66) is rotatably driven by the second turbine (64).

21. A gas turbine engine as defined in claim 20, and further including means for driving both the first turbine and the second turbine at controllably-variable angular velocities, such that the compressor provides a selected pressure ratio.

**Revendications**

1. Moteur à turbine à gaz comprenant au moins une chambre (5) destinée à la combustion d'un carburant et d'air comprimé, au moins une turbine (18) ayant des ailettes destinées à être entraînées en rotation par les gaz de combustion provenant de la chambre de combustion (5), un compresseur (1) entraîné en rotation par la turbine ou une turbine supplémentaire et destiné à transmettre de l'air comprimé à la chambre ou à chaque chambre de combustion (5), et des moyens d'évacuation délimitant un premier et un second canaux (5.3, 5.4) d'évacuation des gaz de combustion de la chambre ou d'une chambre de combustion (5), le premier canal rejoignant la turbine (18) d'entraînement du compresseur et le second canal (5.4) étant disposé en dérivation par rapport à la turbine d'entraînement du compresseur, et des moyens (7) de régulation des proportions relatives des gaz de combustion évacués par le premier et le second canaux (5.3, 5.4), caractérisé en ce que les ailettes de la turbine ou de l'une au moins des turbines sont formées avec des passages de refroidissement qui aboutissent à des lumières de sortie placées aux périphéries externes des ailettes, et la chambre de combustion (5) ou l'une des chambres de combustion est annulaire et entoure la turbine (18) ayant ces passages, les lumières de sortie des ailettes de cette turbine étant disposées afin qu'elles évacuent du liquide dans la chambre annulaire de combustion placée autour.

2. Moteur à turbine à gaz selon la revendication 1, caractérisé en ce que le carburant liquide est transmis auxdits passages formés dans les ailettes de la turbine.

3. Moteur à turbine à gaz selon la revendication 1 ou 2, comprenant une seconde turbine (21) raccordée à une charge variable, la partie des gaz de combustion évacuée par le second canal (5.4) et passant en dérivation par rapport à la première turbine (18) entraînant la seconde turbine (21) et la charge variable.

4. Moteur à turbine à gaz selon l'une quelconque des revendications 1 à 3, dans lequel les moyens de régulation comportent un dispositif d'obturation (7) destiné à réguler les dimensions relatives des sections du premier et du second canaux.

5. Moteur à turbine à gaz selon la revendication 4, dans lequel le dispositif d'obturation (7) régule la dimension de la section du second canal (5.4) qui évacue les gaz de combustion suivant le trajet passant en dérivation par rapport à la turbine.

6. Moteur à turbine à gaz selon la revendication 4 ou 5, dans lequel le dispositif d'obturation comporte une bague mobile axialement, placée entre le premier et le second canaux et destinée à réguler les sections relatives du premier et du second canaux.

7. Moteur à turbine à gaz selon l'une quelconque des revendications 3 à 5, dans lequel le dispositif d'obturation comporte une bague coulissante (7) placée sur le trajet des gaz de combustion évacués de la chambre (5) de combustion, la bague coulissante modifiant les dimensions relatives du premier et du second canaux d'évacuation sans modifier notablement la section combinée des deux canaux.

8. Moteur à turbine à gaz selon l'une quelconque des revendications précédentes, dans lequel le moteur entraîne une charge variable et le moteur comporte des moyens (50) d'étranglement destinés à ajuster le débit d'air comprimé dirigé par le compresseur (1) dans la chambre de combustion (5).

9. Moteur à turbine à gaz selon la revendication 8, dans lequel les moyens d'étranglement (50) comportent plusieurs palettes réglables placées à l'entrée du compresseur, les palettes ayant aussi pour rôle d'assurer un tourbillonnement préalable de l'air dirigé dans le compresseur.

10. Moteur à turbine à gaz selon l'une quelconque des revendications précédentes, comprenant des canaux d'introduction d'air dans les passages de la turbine, destinés à créer un mélange turbulent de liquide et d'air dans les passages, ce mélange augmentant l'absorption de chaleur des ailettes, le mélange chauffé de liquide et d'air étant ensuite éjecté par les lumières de sortie dans la chambre de combustion.

11. Moteur à turbine à gaz selon l'une quelconque des revendications 2 à 10, comprenant en outre des moyens d'injection d'eau dans les passages de la turbine de manière que cette eau refroidisse la turbine et pénètre ensuite dans la chambre de combustion par les lumières de sortie sous forme de vapeur d'eau surchauffée à grande vitesse, la vapeur d'eau diluant les gaz de combustion et réduisant ainsi sa température, et assurant aussi la formation d'un cycle de Rankine par corégénation interne, et des moyens d'ajustement des quantités relatives d'air, de carburant liquide et d'eau injectées dans les passages de turbine.

12. Moteur à turbine à gaz selon l'une quelconque des revendications précédentes, dans lequel les moyens d'évacuation comportent en outre un conduit commun de détente destiné à mélanger les gaz de combustion évacués par le premier et le second canaux (5.3, 5.4) afin que la partie des gaz de combustion évacués par le premier canal (5.3) et la turbine (18) soit réchauffée.

13. Moteur à turbine à gaz selon la revendication 12, comprenant en outre une seconde turbine (29) entraînée par les gaz de combustion mélangés dans le conduit commun de détente, la seconde turbine entraînant une charge variable.

14. Moteur à turbine à gaz selon la revendication 12 ou 13, comprenant en outre un dispositif (32) à tuyères destiné à évacuer les gaz de combustion mélangés dans le conduit commun de détente (31) afin que le moteur fonctionne en réacteur.

15. Moteur à turbine à gaz selon l'une quelconque des revendications précédentes, comprenant un dispositif (33) de compression destiné à diriger de l'air à haute pression vers la chambre de combustion, en dérivation par rapport au compresseur (1), et des moyens pour commander sélectivement ce dispositif (33) de compression chaque fois que la vitesse du moteur par rapport à la vitesse de l'air entourant le moteur atteint une valeur prédéterminée.

16. Moteur à turbine à gaz selon l'une quelconque des revendications 1 à 14, comprenant en outre des moyens délimitant une seconde chambre de combustion ($K_2$) placée en aval de la turbine (36) et des seconds moyens (38) de régulation des proportions relatives d'air comprimé dirigé directement par le compresseur vers les deux chambres respectives de combustion, la seconde chambre de combustion recevant de l'air comprimé du compresseur ainsi que des gaz de combustion de la première chambre de combustion, par l'intermédiaire de l'un au moins des premier et second canaux.

17. Moteur à turbine à gaz selon l'une quelconque des revendications précédentes, dans lequel le compresseur (1) comporte des moyens de refroidissement de l'air lorsqu'il est comprimé (figure 3).

18. Moteur à turbine à gaz selon la revendication 17, dans lequel les moyens de refroidissement comprennent une double enveloppe de refroidissement, des moyens destinés à canaliser un liquide de refroidissement dans la double enveloppe de refroidissement, et un dispositif destiné à pulvériser un oxydant de refroidissement ($LO_2$) à l'intérieur du compresseur.

19. Moteur à turbine à gaz selon l'une quelconque des revendications précédentes, comprenant en outre une seconde turbine (48) raccordée à une première charge variable et une troisième turbine (58) raccordée à une seconde charge variable, et dans lequel les gaz de combustion évacués par le second canal, en dérivation par rapport à la première turbine (54), entraînent la seconde turbine (48) qui est raccordée à la première charge variable, le moteur comprenant en outre des moyens délimitant une seconde chambre de combustion dans laquelle du carburant et de l'air sont mélangés et brûlés afin qu'ils forment des gaz de combustion, des moyens destinés à utiliser les gaz de combustion produits dans la seconde chambre de combustion pour l'entraînement de la troisième turbine (58) qui est raccordée à la seconde charge variable, et un dispositif (60) associé au compresseur et destiné à diriger des proportions choisies d'air comprimé vers la première et la seconde chambres respectives de combustion.

20. Moteur à turbine à gaz selon l'une quelconque des revendications précédentes, dans lequel le compresseur comprend un premier et un second rotors (62, 66) qui tournent en sens inverse, le moteur comprenant en outre une seconde turbine (64) d'entraînement de compresseur entraînée en rotation par les gaz de combustion évacués d'une seconde chambre de combustion (56), et le premier rotor (62) de compresseur est entraîné en rotation par la première turbine (54) et le second rotor (66) de compresseur est entraîné en rotation par la seconde turbine (64).

21. Moteur à turbine à gaz selon la revendication 20, comprenant en outre un dispositif destiné à entraîner à la fois la première turbine et la seconde turbine à des vitesses angulaires variables de façon réglable afin que le compresseur donne un rapport choisi des pressions.

**Patentansprüche**

1. Gasturbinenmotor, mit wenigestens einer Brennkammer (5) zum Verbrennen von Brennstoff und komprimierter Luft, wenigstens einer Turbine (18) mit Turbinenschaufeln, die so angeordnet sind, daß sie von Verbrennungsgasen aus der Brennkammer (5) drehangetrieben werden, einem Kompressor (1), der durch die Turbine oder eine weitere Turbine zum Liefern komprimierten Luft zu der oder jeder Brennkammer (5) drehangetrieben wird, und Austragemitteln, die erste und zweite Kanäle (5.3, 5.4) zum Austragen von Verbrennungsgasen aus der oder einer Brennkammer (5) definieren, wobei der erste Kanal zu der kompressortreibenden Turbine (18) führt und der zweite Kanal (5.4) die kompressortreibende Turbine umgeht, und Einstellmitteln (7) zum Einstellen der relativen Verhältnisse von Verbrennungsgasen, die entlang des ersten und des zweiten Kanales (5.3, 5.4) ausgetragen werden, dadurch **gekennzeichnet,** daß die Turbinenschaufeln der Turbine oder wenigstens einer der Turbinen mit Kühldurchlässen ausgebildet sind, die in Auslaßöffnungen am Außenumfang der Schaufeln enden, und die Brennkammer (5) der eine der Brennkammern ringförmig ist und die Turbine (18), die mit den Durchlässen gebildet ist, umgibt, wobei die Auslaßöffnungen der Turbinenschaufeln so angeordnet sind, daß sie Flüssigkeit in die ringförmige umgebende Brennkammer entlassen.

2. Gasturbinenmotor nach Anspruch 1, dadurch gekennzeichnet, daß Flüssigbrennsstoff zu den Durchlässen in den Turbinenschaufeln geliefert wird.

3. Gasturbinenmotor nach Anspruch 1 oder 2, mit einer zweiten Turbine (21), die mit einer variablen Last verbunden ist, wobei der Anteil der Verbrennungsgase, die aus dem zweiten Kanal (5.4) ausgelassen werden, welcher die erste Turbine (18) umgeht, die zweite Turbine (21) und die variable Last antreibt.

4. Gasturbinenmotor nach einem der Ansprüche 1 bis 3, bei dem das Einstellmittel ein Ventilmittel (7) zum Einstellen der relativen Querschnittsgrößen des ersten und des zweiten Kanales umfaßt.

5. Gasturbinenmotor nach Anspruch 4, bei dem das Ventilmittel (7) die Querschnittsgröße des zweiten Kanals (5.4), der Verbrennungsgase entlang des Weges, der die Turbine umgeht, entläßt, einstellt.

6. Gasturbinenmotor nach Anspruch 4 oder 5, bei dem das Ventilmittel einen axial bewegbaren Ring umfaßt, der zwischen dem ersten und dem zweiten Kanal zum Einstellen der relativen Querschnittsgrößen des ersten und des zweiten Kanales angeordnet ist.

7. Gasturbinenmotor nach einem der Ansprüche 3 bis 5, bei dem das Ventilmittel einen Gleitring (7) umfaßt, der in dem Weg der Verbrennungsgase angeordnet ist, die von der Brennkammer (5) entlassen werden, wobei der Gleitring die relativen Größen des ersten und des zweiten Auslaßkanales ändert, ohne im wesentlichen die gesamte Querschnittsgröße der zwei Kanäle zu ändern.

8. Gasturbinenmotor nach einem der vorangehenden Ansprüche, bei dem der Motor eine variable Last treibt und der Motor ein Drosselmittel (50) zum Anpassen der Flußrate der komprimierten Luft umfaßt, die von dem Kompressor (1) in die Brennkammer (5) geleitet wird.

9. Gasturbinenmotor nach Anspruch 8, bei dem das Drosselmittel (50) eine Vielzahl einstellbarer Schaufeln umfaßt, die im Einlaß des Kompressors angeordnet sind, wobei die Schaufeln auch das Aufgeben eines Vorwirbels auf die Luft, die in den Kompressor geleitet wird, bewirken.

10. Gasturbinenmotor nach einem der vorangehenden Ansprüche, mit Luftkanälen zum Einführen von Luft in die Turbinendurchlässe, um eine turbulente Mischung von Flüssigkeit und Luft in den Durchlässen zu erzeugen, die die Absorption von Wärme von den Schaufeln verbessert, wobei die erwärmte Mischung von Flüssigkeit und Luft danach durch die Auslaßöffnungen in die Brennkammer ausgestoßen wird.

11. Gasturbinenmotor nach einem der Ansprüche 2 bis 10, mit Mitteln zum Einspritzen von Wasser in die Turbinendurchlässe, so daß das Wasser die Turbine kühlt und nachfolgend in die Brennkammer durch die Einspritzöffnungen als überhitzter Dampf mit hoher Geschwindigkeit in die Brennkammer eintritt, wobei der Dampf die Brennkammer durch die Auslaßöffnungen als überhitzter Dampf mit hoher Geschwindigkeit verdünnend flutet, wobei der Dampf die Verbrennungsgase verdünnt und so ihre Temperatur senkt und auch einen Rankine-Zyklus schafft, durch interne gleichzeitige Erzeugung, und Mittel zum Einstellen der relativen Mengen von Luft, Flüssigkbrennstoff und Wasser, die in die Turbinendurchlässe eingespritzt werden.

12. Gasturbinenmotor nach einem der vorangehenden Ansprüche, wobei das Austragemittel weiter eine gemeinsame Expansionsleitung zum Mischen der Verbrennungsgase, welche durch den ersten und den zweiten Kanal (5.3, 5.4) entlassen werden, umfaßt, um den Anteil der Verbrennungsgase wieder zu erhitzen, der durch den ersten Kanal (5.3) und die Turbine (18) ausgetragen worden ist.

13. Gasturbinenmotor nach Anspruch 12, der weiterhin eine zweite Turbine (29) umfaßt, der von den Verbrennungsgasen angetrieben wird, welche in der gemeinsamen Expansionsleitung vermischt worden sind, wobei die zweite Turbine eine variable Last antreibt.

14. Gasturbinenmotor nach Anspruch 12 oder 13, der weiterhin ein Düsenmittel (32) zum Auslassen der in der gemeinsamen Expansionsleitung (31) vermischten Verbrennungsgase umfaßt, so daß der Motor als Jet arbeitet.

15. Gasturbinenmotor nach einem der vorangehenden Ansprüche, mit einem Ausstoßmittel (33) zum Leiten unter hohem Druck stehender Luft in die Brennkammer, wobei der Kompressor (1) umgangen wird, und Mitteln zum selektiven Betreiben des Ausstoßmittels (33), wann immer die Geschwindigkeit des Motors in bezug auf die Geschwindigkeit der Luft, die den Motor umgibt, einen vorbestimmten Wert erreicht.

16. Gasturbinenmotor nach einem der Ansprüche 1 bis 14, der weiterhin Mittel umfaßt, die eine zweite Brennkammer ($K_2$), stromabwärts der Turbine (36) angeordnet, und zweite Einstellmittel (38) zum Einstellen der relativen Verhältnisse der komprimierten Luft, die vom Kompressor direkt zu den zwei jeweiligen Brennkammern geleitet wird, umfaßt, wobei die zweite Brennkammer sowohl komprimierte Luft vom Kompressor als auch Verbrennungsgase von der ersten Brennkammer, über eine oder beide der ersten und zweiten Kanäle, erhält.

17. Gasturbinenmotor nach einem der vorangehenden Ansprüche, bei dem der Kompressor (1) Kühlmittel zum Kühlen der Luft, wenn sie komprimiert wird, umfaßt (Fig. 3).

18. Gasturbinenmotor nach Anspruch 17, bei dem die Kühlmittel einen Kühlmantel, Mittel zum Kanalisieren einer Kühlflüssigkeit durch den Kühlmantel und Mittel zum Versprühen eines kühlenden Oxidans ($LO_2$) in das Innere des Kompressors umfassen.

19. Gasturbinenmotor nach einem der vorangehenden Ansprüche, weiterhin umfassend eine zweite Turbine (48), die mit einer ersten variablen Last verbunden ist, und eine dritte Turbine (58), die mit einer zweiten variablen Last verbunden ist, wobei die Verbrennungsgase, die durch den zweiten Kanal ausgelassen werden, die erste Turbine (54) umgehen, die zweite Turbine (48), die mit der ersten variablen Last verbunden ist, antreiben, wobei der Motor weiterhin Mittel umfaßt, die eine zweite Brennkammer definieren, in der Brennstoff und Luft vermischt werden und zum Erzeugen von Verbrennungsgasen verbrannt werden, Mittel zum Verwenden der Verbrennungsgase, die in der zweiten Brennkammer erzeugt werden, zum Antreiben der dritten Turbine (58), die mit der zweiten variablen Last verbunden ist, und Mittel (60), die mit dem Kompressor verbunden sind, um ausgewählte Anteile der komprimierten Luft jeweils zur ersten und zweiten Brennkammer zu leiten.

20. Gasturbinenmotor nach einem der vorangehenden Ansprüche, bei dem der Kompressor erste und zweite sich gegenläufig drehende Rotoren (62, 66) umfaßt, wobei der Motor weiterhin eine zweite kompressorgetriebene Turbine (64) umfaßt, die von den Brenngasen drehangetrieben wird, die von einer zweiten Brennkammer (56) ausgelassen werden, wobei der erste Kompressorrotor (26) von der ersten Turbine (54) drehangetrieben und der zweite Kompressorrotor (66) von der zweiten Turbine (64) drehangetrieben wird.

21. Gasturbinenmotor nach Anspruch 20, der weiterhin Mittel zum Antreiben sowohl der ersten Turbine als auch der zweiten Turbine mit regelbar variablen Winkelgeschwindigkeiten umfaßt, so daß der Kompressor ein ausgewähltes Druckverhältnis liefert.

FIG.1

FIG.2

EP 0 198 077 B1

FIG.3

FIG.4

FIG.5

FIG.6

# FIG.7

# FIG.8

EP 0 198 077 B1

FIG.9

FIG. 10

FIG.11

FIG.12

FIG.13

FIG. 14 EFFECT OF COMPRESSOR PERFORMANCE ON ENGINE CYCLE PERFORMANCE

FIG. 15 EFFECT OF GAS TEMPERATURE ON ENGINE CYCLE PERFORMANCE

FIG. 16 EFFECT OF COOLING BLEED ON ENGINE CYCLE PERFORMANCE